# EUROPEAN PATENT APPLICATION

(11) **EP 2 228 420 A1**
(43) Date of publication of application: **15.09.2010**
(21) Application number: 09154635.8
(22) Date of filing: 09.03.2009
(51) Int. Cl.: C09K 3/22

(54) **Additive for dust scattering preventing coatingt water**

(71) Applicant: JAPAN CORN STARCH CO., LTD., Minato-ku Tokyo (JP)
(72) Inventor: Murase, Hiroshige, Hekinan-shi Aichi (JP)
(74) Representative: TBK-Patent

(57) **Abstract**

[Object] To provide an additive for dust scattering preventing coating water of which the coating water can permeate into a mineral-fiber-containing installation layer of asbestos, etc. , to suppress scattering of dust and thereby enable stripping removal of the mineral-fiber-containing installation layer to be performed efficiently, at low cost, and safely.

[Solution Means] An additive for dust scattering preventing coating water used by adding and dissolving in a coating water and coating onto a mineral-fiber-containing installation layer. The additive contains fructose as a water retention imparting agent, glycerin as a moisture retention maintaining agent, and a surfactant as a permeation promoter, and furthermore contains a sugar alcohol.

## Description

### [Technical Field]

The present invention relates to an additive for dust scattering preventing coating water to be used by adding and dissolving to a coating water for preventing scattering of dust in a work of removing a mineral-fiber-containing installation layer (may be referred to hereinafter as "mineral fiber installation layer"), etc.

In the present specification, units of mixture proportions and concentration are units in terms of mass unless noted otherwise.

### [Background Art]

Mineral fibers, such as asbestos, rock wool, glass fibers, etc. , and particularly asbestos, which is a naturally occurring fiber silicate mineral, are excellent in heat resistance, sound insulation, etc., and have been widely used as thermal insulation materials and sound insulation materials for buildings.

However, even among mineral fibers, asbestos fibers are extremely fine, and asbestos dust is considered to cause mesothelioma and lung cancer when inhaled. Thus, in recent years, a work of strippingly removing sprayed asbestos layers while applying asbestos scattering prevention measures is carried out when performing demolition or renovation of old buildings in various locations.

Generally as a method of asbestos layer removal work, stripping removal is performed after making various chemical agents, such as a moistening agent, hardening agent, etc., permeate into an asbestos installation layer to prevent scattering of asbestos dust in the process of removal (see Patent Documents 1 to 4, etc.).

However, such chemical agents dry readily after permeating and were deficient in dust scattering suppression effect during stripping removal.

Although the present inventors have proposed a removal treatment agent (additive for dust scattering preventing coating water) for asbestos installation layer to resolve the above problems (Patent Document 5), there was space for further improvement. That is, an additive for dust scattering preventing coating water of high permeability, moisture retaining property, and maintenance of moistness and solidification as well as low cost has come to be demanded. Improvement of work efficiency (reduction of work costs, shortening of work period, etc.) by reduction of usage amount and improvement of workability can be anticipated by use of such an additive for coating water.
[Prior Art Documents]
[Patent Documents]

[Patent Document 1]
   Japanese Published Patent Application No. H02-21984 A(Claims, etc.)
[Patent Document 2]
   Japanese Published Patent Application No. H02-229880 A(Claims, etc.)
[Patent Document 3]
   Japanese Published Patent Application No. 2002-137976 A (Claims, etc.)
[Patent Document 4]
   Japanese Published Patent Application No. H10-323614 A (Claims, etc.)
[Patent Document 5]
   Japanese Published Patent Application No. 2007-262313 A (Claims, etc.)

### [SUMMARY OF THE INVENTION]

### [Problems to be Solved by the Invention]

In view of the above, an object (theme) of the present invention is to provide an additive for coating water that can prevent scattering of hazardous dust and can particularly be made to permeate into a sprayed asbestos installation layer to suppress scattering of dust and thereby enable stripping removal of a mineral fiber installation layer to be performed efficiently, at low cost, and safely.

### [Means for Solving the Problem]

As a result of diligent research, the present inventors found that scattering of dust can be prevented and the above theme can be achieved by making an aqueous solution (dust scattering preventing coating water), having both or either of fructose and a sugar alcohol, glycerin, and a surfactant added thereto, permeate into a mineral fiber installation layer.

That is, the present invention provides an additive for dust scattering preventing coating water that is used by adding and dissolving in a coating water for preventing scattering of dust in a work of removing a mineral-fiber-containing installation layer, etc., and includes, as essential components, a water retention imparting agent, made up of one type or a mixture of two types of compound selected from among fructose and sugar alcohols, glycerin, and a surfactant.

Although, the additive according to the present invention may be prepared by measuring out the respective components onsite, a work of preparing the coating water onsite is facilitated by measuring out and storing the respective components in separate packs or by mixing all components from the beginning and storing the mixture in a single pack.

More preferably, the surfactant and a liquid form of a higher concentration as concentrated as possible that contains the respective components excluding the surfactant are stored dividedly. This is because when the surfactant is mixed with the other components from the beginning, a permeation promoting action of the surfactant may become inhibited.

The additive for coatingwater according to the present invention has a composition such that a content of fructose in a total of the essential components is no less than 20%, and mixture proportions of the respective components with respect to 1 part of the water retention imparting agent, made up of one type or a mixture of two types of compound selected from among fructose and sugar alcohols, are: 0.01 to 5 parts (preferably 0.05 to 3 parts) of glycerin; and 0.01 to 2 parts (preferably 0.05 to 1. 0 part) of the surfactant; in consideration of characteristics, to be described below, of the respective components.

The water retention imparting agent is preferably a mixture in which the mixture proportion of a sugar alcohol with respect to 1 part of fructose is 0.05 to 5 parts.

When the content percentage of the water retention imparting agent in the total of the essential components is low, water retention, which is an action of the water retention imparting agent, becomes difficult to secure and drying occurs readily after coating.

Concentrations of the respective components when the above-described additive is used to prepare the coating water are: 2 to 15% (preferably 0.3 to 12%) of the water retention imparting agent; 0.05 to 8% (preferably 0.05 to 4%) of glycerin; and 0.05 to 15% (preferably 0.05 to 12%) of the surfactant.

Glycerin increases moisture retention in synergy with the water retention imparting agent and also exhibits actions of preventing crystallization of the water retention imparting agent and preventing freezing. That is, glycerin can prevent drying and hardening of a coating film for a long time after coating. When the amount of glycerin is excessive, the aqueous solution becomes high in viscosity and poor in permeability.

Here, although the fructose may be crystalline fructose, a high fructose corn syrup (HFCS; glucose-fructose liquid sugar) is normally used from a cost perspective.

Here, the high fructose corn syrup is prepared by isomerizing glucose by an isomerase and is a liquid-form sugar containing glucose and a small amount of oligosaccharides (of a degree of polymerization of no more than 10) in addition to fructose. The syrup is normally manufactured by making the isomerase act on a glucose liquid, obtained by hydrolysis of a starch, such as that of corn, potato, rice, tapioca, etc., to convert the glucose to fructose and thereafter performing refining and concentrating. Here, a syrup, with which the fructose content has been increased by performing chromatographic separation by an ion exchange resin on a normal high fructose corn syrup, is also included.

As the high fructose corn syrup, that with which a solid content (≒ sugar content) is no less than about 70% and the fructose content percentage in the solid content is no less than about 35%, preferably no less than about 50%, and more preferably no less than about 70%, is used. When the content percentage in the solid content of fructose is high, a permeation reinforcing action and a water retaining action of fructose increases so that a high permeation rate, good permeation efficiency, and high water retention effect are provided.

Combined use with a starch syrup or dextrin, both of which are products of decomposition of starch by an acid or an enzyme, is possible within a range in which the effect of the present invention is not inhibited.

Glycerin increases a moisture retention maintaining action in synergy with the water retention imparting agent and also exhibits the actions of preventing crystallization of the water retention imparting agent and preventing freezing. That is, glycerin can prevent drying and hardening of the coating film even when the elapsed time after coating becomes long. When the amount of glycerin is excessive, the aqueous solution becomes high in viscosity and poor in permeability.

The type of surfactant is not restricted in particular. One or more types of surfactant selected from among nonionic surfactants, anionic surfactants, cationic surfactants, and amphoteric surfactants may be used. Combined use of a nonionic surfactant and an anionic surfactant is even more preferable.

The surfactant exhibits a permeation promoting action. When excessive, an amount of air bubbles in the aqueous solution becomes high and the permeation efficiency degrades in reverse when the coating water is prepared.

The sugar alcohol exhibits an effect of further increasing the moisture retention maintaining action. Among sugar alcohols, those of low molecular weight, such as sorbitol, xylitol, maltitol, maltotriitol, etc., is preferable, and a reduction product of a sugar up to a trisaccharide is particularly preferable. As commercially available sugar alcohols, reduced starch syrup, reduced maltose starch syrup, etc., may be used. When the amount of the sugar alcohol is excessive, the viscosity of the coating water increases and it becomes difficult to obtain the required permeability.

When the coating water, prepared by dissolving the additive in water and adjusting to a coatable viscosity, is coated on a mineral fiber installation layer, the composition permeates completely into the mineral fiber installation layer, and the moistening effect is exhibited by the synergistic moisture retaining effect by fructose and glycerin to prevent scattering of dust and enable a work of strippingly removing the mineral fiber installation layer to be performed safely and efficiently. The stripped mineral fibers are in a form of a moistened lump and needless to say, dust is not generated after stripping. Because the water retention imparting agent and glycerin provide an effect of fixing the mineral fiber installation layer, the additive can be used not only for removal treatment but also for preventing dust scattering by surface solidification or preventing dust scattering by internal permeation. In addition, as necessary, use of additives other than those mentioned above, such as a preservative, etc., is also possible within a range that does not inhibit the effect of the present invention.

In regard to coating method, spray coating or brush coating onto the mineral fiber installation layer (roof surface or wall surface) is performed. A coating amount differs according to a blend composition and solid content of the composition. Normally, a coating amount of approximately 1/2 to 6 times by mass of the mineral fiber installation layer is preferable, and from a perspective of workability, an amount of no more than 4 times by mass is more preferable. In terms of solid content ratio in the composition, an amount of approximately 0.1 to 3 times by mass with respect to the mineral fiber installation layer is preferable.

A mineral fiber waste (waste mineral fiber material) after the stripping work is generally sealed in a plastic bag so as not to become scattered or is solidified in concrete and treated by burying underground or subject to melting treatment in an electric furnace, etc.

### [EFFECT(S) OF THE INVENTION]

The coating water prepared using the additive for dust scattering preventing coating water according to the present invention is excellent in permeability, moisture retention, and solidification durability and thus permeates completely into the mineral fiber installation layer without dripping of liquid from the coated surface. Because the coating thus does not have to be performed repeatedly, etc., work efficiency (reduction of work costs, shortening of work period, etc.) can be improved by reduction of usage amount and improvement of workability.

The ingredients contained in the additive are both or either of the fructose and the sugar alcohol, the glycerin, the surfactant, and water and none of these are hazardous (do not have any toxicity whatsoever). A contribution to the improvement of workability is made in this regard as well. Also because all of the components are inexpensive ingredients (raw materials), a dust scattering preventing agent of low cost can be provided. Stripping removal of an asbestos installation layer can thus be performed safely, efficiently, and at low cost by the present composition.

### [EXAMPLE(S)]

Examples of the present invention shall now be described. As ingredients, the following were used.

"High-Fructo S95" : high-fructose corn syrup (made by Japan Corn Starch Co., Ltd.; solid content: 75%; fructose content percentage: 95%)
"High-Fructo M75": high-fructose corn syrup (made by the same company as the above; solid content: 75%; fructose content percentage: 55%)
"Fructo MR75" : high-fructose corn syrup (made by the same company as the above; solid content: 75%; fructose content percentage: 35%)
"Glucose L97": liquid glucose (made by the same company as the above; solid content: 75%)
"Glycerin S": glycerin (made by Wako Pure Chemicals Industries, Ltd.; purity: 99%)
"Texport SN-10": surfactant (made by Nicca Chemical Co., Ltd.; mixture of a nonionic surfactant and an anionic surfactant) "Neorate NA-30": surfactant (made by the same company as the above; anionic surfactant)
"Sorbitol": sorbitol (made by Wako Pure Chemicals Industries, Ltd.; purity: 99%)
"Maltitol": maltitol (made by Kanto Chemical Co. , Inc. ; purity: 95%)
"SE-600": reduced starch syrup (made by Nikken Chemical and Synthetic Industry Co., Ltd.; solid content: 75%; content of reduction products of sugars from monosaccharides to trisaccharides: 85%)

### (Example 1)

6000g of water was added to and mixed with an additive with a composition of: "95g of High-Fructo S95; 5g of Glycerin S; and 5g of Texport SN-10" (total: 105g) and the mixture was dispersed uniformly by a stirrer to prepare an additive composition of Example 1.

The additive composition was spray coated onto an asbestos installation layer (roof surface: 40cm×60cm×0.9cm (720g)), which is a subject of removal treatment, and after leaving for 30minutes, stripping work was performed manually using a spatula. As a result, dropping of the coating solution from the coated surface was not seen during spraying, the coating solution permeated completely up to deep internal portions of the asbestos installation layer, and scattering of dust was not seen during stripping. The asbestos installation layer was maintained in a moist state equivalent to that immediately after permeation even after 48 hours from the permeation of the coating solution, and the stripping work could be performed without any problems. Generation of dust was not seen in this process as well.

### (Example 2)

Besides changing the additive composition in Example 1 to: "80g of High-Fructo M75; 20g of Glycerin S; and 5g of Texport SN-10" (total: 105g), the same procedure was carried out to prepare a composition of the present example, and using the composition, spray coating onto an asbestos installation layer and stripping work were performed for evaluation. As in Example 1, the results were satisfactory.

### (Example 3)

Besides changing the additive composition in Example 1 to: "50g of High-Fructo M75; 50g of Glycerin S; and 7g of Texport SN-10" (total: 107g), the same procedure was carried out to prepare a composition of the present example, and using the composition, spray coating onto an asbestos installation layer and stripping work were performed for evaluation. As in Example 1, the results were satisfactory.

### (Example 4)

Besides changing the additive composition in Example 1 to: "adding 100g of water to 45g of High-Fructo M75; 5g of Glycerin S; and 18g of Texport SN-10," the same procedure was carried out to prepare a composition of the present example, and using the composition, spray coating onto an asbestos installation layer and stripping work were performed for evaluation. As in Example 1, the results were satisfactory.

### (Example 5)

Besides changing the additive composition in Example 1 to: "80g of SE-600; 20g of Glycerin S; and 20g of Neorate NA-30" (total: 120g), the same procedure was carried out to prepare a coating water, and using the coating water, spray coating onto an asbestos installation layer and stripping work were performed for evaluation. As in Example 1, the results were satisfactory.

### (Example 6)

Besides changing the additive composition in Example 1 to: "80g of High-Fructo S95; 10g of Glycerin S; 5g of Texport SN-10; and 10g of sorbitol" (total: 105g), the same procedure was carried out to prepare a composition of the present example, and using the composition, spray coating onto an asbestos installation layer and stripping work were performed for evaluation. The results were better than those of Example 1.

### (Example 7)

Besides changing the additive composition in Example 1 to: "80g of High-Fructo S95; 20g of Glycerin S; 20g of Texport SN-10; and 15g of maltitol" (total: 135g), the same procedure was carried out to prepare a coating water, and using the coating water, spray coating onto an asbestos installation layer and stripping work were performed for evaluation. The results were better than those of Example 1.

### (Example 8)

In Example 1, an additive composition of: "95g of High-Fructo S95; 5g of Glycerin S; and 9g of Texport SN-10" (total: 109g) was mixed and stored for 2 weeks at 40°C. Thereafter 6000g of water was added to and mixed with the additive, and the mixture was dispersed uniformly by a stirrer to prepare a coating water. Using the coating water, spray coating onto an asbestos installation layer and stripping work were performed for evaluation. As results, although the moisture retention maintenance was good as in Example 1, the permeability was slightly poorer.

### (Comparative Example 1)

Besides changing the additive composition in Example 1 to: "95g of High-Fructo S95; and 5g of Texport SN-10" (total: 100g), the same procedure was carried out to prepare a coating water of the present comparative example, and using the coating water, spray coating onto an asbestos installation layer and stripping work were performed for evaluation.

As results, the permeability was poorer than in the cases of Examples 1 to 8 and there were portions where complete permeation into deep internal portions of the asbestos installation layer did not occur. Slight dropping of the coating solution from the coated surface was also seen.

### (Comparative Example 2)

Besides changing the additive composition in Example 1 to: "100g of Glucose L97; and 5g of Texport SN-10" (total: 105g), the same procedure was carried out to prepare a coating water of the present comparative example and using the coating water, spray coating onto an asbestos installation layer and stripping work were performed for evaluation, the permeability was found to be clearly poorer than in the cases of Examples 1 to 8 and permeation into deep internal portions of the asbestos installation layer did not occur. Dropping of the coating solution from the coated surface was also seen.

### (Reference Example 1)

The coating water prepared in Example 8 was stored for 2 weeks at 40°C. Thereafter, using the coating water, spray coating onto an asbestos installation layer and stripping work were performed for evaluation. As results, although the moisture retention maintenance was good, the permeability was slightly poorer than in the case of Example 8 and there were some portions at which complete permeation into deep internal portions of the asbestos installation did not occur.

The additive compositions of the respective examples and comparative examples described above are shown in Table 1, and the coating water compositions and the evaluation results of moisture retention maintenance state and permeability are shown in Table 2.

From these results, it can be understood that the coating water, prepared using the additive that satisfies the requirements of the present invention and adjusting the respective component concentrations to be within the predetermined ranges, is favorable for removal treatment of asbestos or other mineral fiber installation layer.

**[Table 1]**

| | Content of water retention imparting agent in additive | Proportion with respect to 1 part of water retention imparting agent | | | |
|---|---|---|---|---|---|
| | | Water retention imparting agent; total=1 | | Glycerin | Permeating agent |
| | | Fructose | Sugar alcohol | | |
| Example 1 | 46.64% | 1.000 | | 0.072 | 0.072 |
| Example 2 | 36.24% | 1.000 | | 0.611 | 0.148 |
| Example 3 | 21.12% | 1.000 | | 2.412 | 0.324 |
| Example 4 | 30.87% | 1.000 | | 0.270 | 0.969 |
| Example 5 | 37.40% | | 1.000 | 0.337 | 0.337 |
| Example 6 | 45.04% | 0.853 | 0.147 | 0.147 | 0.073 |
| Example 7 | 38.93% | 0.802 | 0.198 | 0.284 | 0.284 |
| Example 8 | 45.31% | 1.000 | | 0.072 | 0.135 |
| Comparative Example 1 | 48.26% | 1.000 | | | 0.072 |

**[Table 2]**

| | Concentration in aqueous solution | | | | | Evaluation results | |
|---|---|---|---|---|---|---|---|
| | Water retention imparting agent | | | Glycerin | Permeating agent | Moisture retention maintenance | Permeability |
| | Fructose | Sugar alcohol | Total | | | | |
| Example 1 | 1.11% | | 1.11% | 0.08% | 0.08% | Good | Good |
| Example 2 | 0.54% | | 0.54% | 0.33% | 0.08% | Good | Good |
| Example 3 | 0.34% | | 0.34% | 0.82% | 0.11% | Good | Good |
| Example 4 | 11.05% | | 11.05% | 2.98% | 10.71% | Good | Good |
| Example 5 | | 0.98% | 0.98% | 0.33% | 0.33% | Good | Good |
| Example 6 | 0.93% | 0.16% | 1.09% | 0.16% | 0.08% | Better | Good |
| Example 7 | 0.93% | 0.23% | 1.16% | 0.33% | 0.33% | Better | Good |
| Example 8 | 1.11% | | 1.11% | 0.08% | 0.15% | Good | Good |
| Comparative Example 1 | 1.11% | | 1.11% | | 0.08% | Slightly poorer | Slightly poorer |
| Comparative Example 2 | Glucose 1.19% | | 1.19% | | 0.08% | Poorer | Poorer |
| Comparative Example 3 | 1.11% | | 1.11% | 0.08% | 0.15% | Good | Slightly poorer |

## Claims

1. An additive for dust scattering preventing coating water, used by adding and dissolving in a coating water for preventing scattering of dust in a work of removing (stripping) a mineral-fiber-containing installation layer, etc., and comprising, as essential components: a water retention imparting agent, made up of both or either of fructose and a sugar alcohol; glycerin; and a surfactant.

2. The additive for dust scattering preventing coating water according to Claim 1, wherein the water retention imparting agent, made up of both or either of the fructose and the sugar alcohol in a total of the essential components, is contained at an amount of no less than 15 mass%, and mixture proportions of the respective components with respect to 1 mass part of the water retention imparting agent are: 0.01 to 5 mass parts of the glycerin; and 0.01 to 2 mass parts of the surfactant.

3. The additive for dust scattering preventing coating water according to Claim 2, wherein the water retention imparting agent is contained at an amount of no less than 20 mass%, and
the mixture proportions of the respective components with respect to 1 mass part of the water retention imparting agent are: 0.05 to 3 mass parts of the glycerin; and 0.05 to 1 mass part of the surfactant.

4. The additive for dust scattering preventing coating water according to Claim 2, wherein the surfactant is a combined system of a nonionic surfactant and an anionic surfactant.

5. The additive for dust scattering preventing coating water according to Claim 1, wherein the sugar alcohol is a sugar alcohol of a trisaccharide or lower sugar.

6. The additive for dust scattering preventing coating water according to Claim 5, wherein the sugar alcohol is sorbitol and/or maltitol.

7. The additive for dust scattering preventing coating water according to Claim 2, wherein in the water retention imparting agent, the mixture proportion of the sugar alcohol with respect to 1 mass part of fructose is 0.05 to 5 mass parts.

8. The additive for dust scattering preventing coating water according to Claim 1 or 2 in an aqueous solution form of a higher concentration as concentrated as possible that contains the respective components excluding the surfactant.

9. A dust scattering preventing coating water, comprising, as essential components: a water retention imparting agent, made up of one type or a mixture of two types of compound selected from among fructose and sugar alcohols; glycerin; and a surfactant; with concentrations of the respective components in the coating water being: 0.2 to 15 mass% of the water retention imparting agent; 0.05 to 8 mass% of the glycerin; and 0.05 to 15 mass% of the surfactant and being adjusted to a viscosity enabling coating onto a mineral-fiber-containing installation layer.

10. A method for removing a mineral-fiber-containing installation layer, wherein, a work of removing themineral-fiber-containing installation layer is performed after coating the dust scattering preventing coating water according to Claim 9 onto the mineral-fiber-containing installation layer at an amount of 1/2 to 6 times by mass of the mineral-fiber-containing installation layer.
